(19) Europäisches Patentamt
European Patent Office
Office européen des brevets

(11) EP 1 845 727 A2

(12) **EUROPEAN PATENT APPLICATION**

(43) Date of publication:
**17.10.2007 Bulletin 2007/42**

(51) Int Cl.:
**H04N 7/16** (2006.01)

(21) Application number: **07000678.8**

(22) Date of filing: **15.01.2007**

| | |
|---|---|
| (84) Designated Contracting States:<br>**AT BE BG CH CY CZ DE DK EE ES FI FR GB GR HU IE IS IT LI LT LU LV MC NL PL PT RO SE SI SK TR**<br>Designated Extension States:<br>**AL BA HR MK YU**<br><br>(30) Priority: **10.04.2006 KR 20060032190**<br><br>(71) Applicant: **Samsung Electronics Co., Ltd.**<br>**Suwon-si, Gyeonggi-Do (KR)** | (72) Inventors:<br>• **Yoon, Sang Hyeon**<br>**Suwon-si, Gyeonggi-do (KR)**<br>• **Kim, Hee Deog**<br>**Suwon-si, Gyeonggi-do (KR)**<br><br>(74) Representative: **Boakes, Jason Carrington et al**<br>**Harrison Goddard Foote**<br>**106 Micklegate**<br>**York, YO1 6JX (GB)** |

(54) **Digital broadcast receiver and access restriction method for the same**

(57) A digital broadcast receiver and associated access restriction method are disclosed. The access restriction method includes receiving digital broadcast data containing access restriction information, selecting in sequence scene broadcast data from the digital broadcast data, determining whether access restriction is applied to the scene broadcast data, providing, if access restriction is applied, an advance notice for a corresponding access-restricted scene, and outputting the scene broadcast data at a time delayed by a preset preliminary notice duration.

FIG. 1

EP 1 845 727 A2

## Description

## BACKGROUND OF THE INVENTION

### 1. Field of the Invention

The present invention relates generally to a digital broadcast receiver and, more particularly, to a digital broadcast receiver and an access restriction method for the digital broadcast receiver wherein advance notices are provided before output of access-restricted scenes in digital broadcast data, enabling users to handle undesirable scenes in advance.

### 2. Description of the Related Art

In digital multimedia broadcasting (DMB), various multimedia signals including audio and video are digitally modulated and delivered to users. Particularly, users in motion can receive various multimedia programs through portable personal or in-vehicle receivers equipped with an omnidirectional receiving antenna.

Advances in memories capable of storing vast amounts of digital multimedia data such as moving pictures and music videos, and popularization of mobile communication terminals, have enabled recent development and commercialization of mobile communication terminals having DMB reception capabilities, such as DMB phones.

A user can receive DMB programs through a DMB phone while in motion, and thus can readily carry a DMB phone and enjoy favorite DMB programs at most times and places.

However, DMB reception in public places may cause an embarrassing situation owing to display of, for example, scenes considered improper for young people.

This problem may arise in broadcast reception using conventional digital broadcast receivers including DMB phones. For example, when parents and children are watching together a digital broadcast program at home, sudden and unexpected display of scenes undesirable for children such as violent or sensational scenes may be inappropriate for parents to view with children.

## SUMMARY OF THE INVENTION

The present invention has been made in view of the above problems, and an object of the present invention is to provide a digital broadcast receiver and an access restriction method for the digital broadcast receiver that enable users to handle sudden reception of undesirable scenes in advance.

Another object of the present invention is to provide a digital broadcast receiver and an access restriction method for the digital broadcast receiver that give advance notice to a user of access restriction information regarding scenes in digital broadcast data.

In accordance with the present invention, there is provided a digital broadcast receiver including a receiving unit for receiving digital broadcast data including access restriction information regarding scenes of a broadcast program, a controller for identifying an access-restricted scene using the access restriction information, and producing in advance a restriction control signal indicating the identified access-restricted scene prior to a start time of the scene, and an output unit for providing, in response to the restriction control signal, an advance notice of the access-restricted scene.

The digital broadcast data received by the receiving unit includes access restriction information arranged at a beginning portion of the corresponding program. Alternatively, the digital broadcast data received by the receiving unit may include access restriction information distributed among individual scenes of the corresponding program.

The controller delays output of the digital broadcast data by a preset preliminary notice duration, and controls output of an advance notice for an access-restricted scene within the preliminary notice duration. The controller also detects access restriction information regarding scenes of a particular program from the digital broadcast data, creates a management table using the detected access restriction information to manage scene access restriction information, and controls output of advance notices for access-restricted scenes in the program using the management table.

The management table includes a start time and scene play durations of the program. The controller sets a start time of a beginning scene to the start time of the program, computes a start time of each scene by adding play durations of preceding scenes to the start time of the beginning scene, and controls output of an advance notice for an access-restricted scene before the start time of the access-restricted scene by the preliminary notice duration. The controller sets the start time of the beginning scene to a time delayed by the preliminary notice duration from the start time of the program.

The digital broadcast receiver further includes a data memory for storing digital broadcast data received and recorded according to a user record request. The controller, according to a user replay request, selects scene broadcast data in sequence from the stored digital broadcast data and delays output of the selected scene broadcast data by a preset preliminary notice duration, and controls output of an advance notice for an access-restricted scene within the preliminary notice duration.

The data memory stores scene broadcast data corresponding to scenes of a particular program, the scene broadcast data including a scene number, an access restriction level, a start time and a play duration.

The controller, according to a user replay request for a particular program, selects in sequence scene broadcast data of the replay-requested program from the data memory, sets a start time of a beginning scene of the program to a requested replay duration, computes a start time of each scene by adding play durations of preceding scenes to the start time of the beginning scene, and controls output of an advance notice for an access-restricted scene before the start time of the access-restricted scene by the preliminary notice duration. The controller sets the start time of the beginning scene to a time delayed by the preliminary notice duration from the start time of the program.

The output unit outputs the advance notice as a text message, visual image or voice signal.

In accordance with the present invention, there is provided another embodiment of an access restriction method for a digital broadcast receiver, including, receiving digital broadcast data containing access restriction information regarding scenes of a program, selecting in sequence scene broadcast data from the received digital broadcast data, determining whether access restriction is applied to the selected scene broadcast data, providing, if access restriction is applied to the selected scene broadcast data, an advance notice for a corresponding access-restricted scene, and outputting the selected scene broadcast data at a time delayed by a preset preliminary notice duration.

The digital broadcast data received at the receiving step includes access restriction information regarding scenes of a particular program, the access restriction information being arranged at a beginning portion of the program.

The receiving step further includes detecting the access restriction information from the beginning portion of the program in the received digital broadcast data, and creating and storing a management table to store scene broadcast data, associated access restriction levels, start times and play durations. Determining whether access restriction is applied to a scene for output is performed using the management table, as well as using corresponding scene broadcast data. The received digital broadcast data may include access restriction information regarding scenes of a particular program, the access restriction information being distributed among individual scenes of the program.

At the providing step the advance notice is output as a text message, a visual image or a voice signal. In accordance with the present invention, there is provided another embodiment of an access restriction method for a digital broadcast receiver, including selecting, in response to a user replay request for a particular recorded program, scene broadcast data of the recorded program in sequence from stored digital broadcast data, determining whether access restriction is applied to the selected scene broadcast data, providing, if access restriction is applied to the selected scene broadcast data, an advance notice for a corresponding access-restricted scene, and outputting the selected scene broadcast data at a time delayed by a preset preliminary notice duration. The access restriction method further includes receiving, in response to a user record request for a particular program, digital broadcast data containing access restriction information regarding scenes of the record-requested program, and storing the received digital broadcast data. At the storing step a management table is created using the received digital broadcast data to store scenes of the record-requested program each including a corresponding program identifier and an access restriction level. At the selecting step scene broadcast data having a program identifier equal to that of the replay-requested program is selected from the management table.

At the providing step the advance notice is output as a text message, a visual image or a voice signal.

## BRIEF DESCRIPTION OF THE DRAWINGS

The above and other objects, features and advantages of the present invention will be more apparent from the following detailed description in conjunction with the accompanying drawings, in which:

FIG. 1 illustrates the configuration of a digital broadcast receiver according to the present invention;
FIG. 2 shows a format of digital broadcast data receivable by the digital broadcast receiver of FIG. 1;
FIG. 3 illustrates a broadcast data table for managing digital broadcast data in the digital broadcast receiver of FIG. 1;
FIGS. 4 and 5 are flow charts illustrating steps of a first embodiment of an access restriction method according to the present invention;
FIG. 6 is a flow chart illustrating steps of a second embodiment of an access restriction method according to the present invention;
FIG. 7 is a flow chart illustrating steps of a third embodiment of an access restriction method according to the present invention;
FIG. 8 is a flow chart illustrating steps of a fourth embodiment of an access restriction method according to the present invention;
FIGS. 9A to 9C are display screen representations illustrating advance notices of access-restricted scenes output by the methods of FIGS. 5 to 8; and
FIGS. 10A to 10C are display screen representations illustrating access-restricted scenes preprocessed by the methods of FIGS. 7 and 8.

## DETAILED DESCRIPTION OF THE PREFERRED EMBODIMENTS

Hereinafter, preferred embodiments of the present invention are described in detail with reference to the accompanying drawings. The same reference symbols identify the same or corresponding elements in the drawings. Some constructions or processes known in the art are not described for the sake of clarity and conciseness.

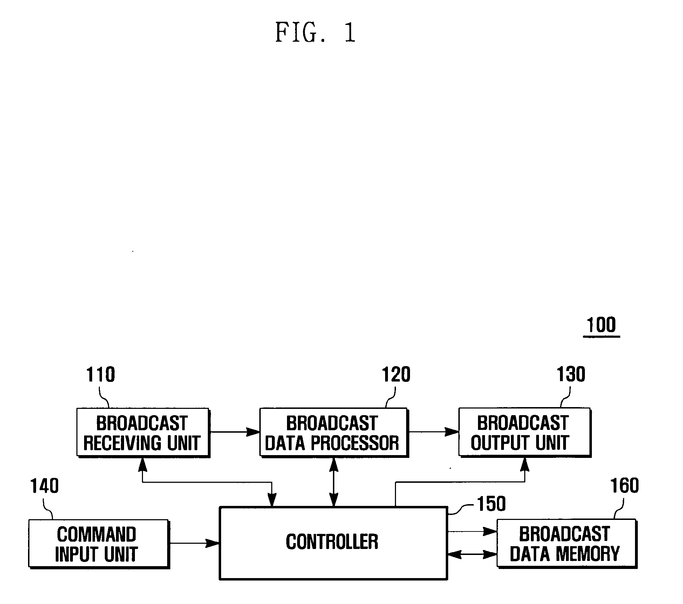

FIG. 1 illustrates the configuration of a digital broadcast receiver according to the present invention. Referring to FIG. 1, the digital broadcast receiver 100 comprises a broadcast receiving unit 110, a broadcast data processor 120, a broadcast output unit 130, a command input unit 140, a controller 150 and a broadcast data memory 160.

The broadcast receiving unit 110 receives digital broadcast data such as digital multimedia broadcasting (DMB) data by selectively tuning to, for example, a code division multiplexing (CDM) channel according to user selections. The broadcast receiving unit 110 preferably includes an omnidirectional antenna. The broadcast receiving unit 110 receives digital broadcast data containing access restriction information regarding scenes of a broadcast program. The access restriction information may be transmitted on a program or scene basis. That is, access restriction information for scenes constituting a particular program is contained in a beginning portion of the program data, or is distributed among individual scenes such that each scene and associated access restriction information can be transmitted together.

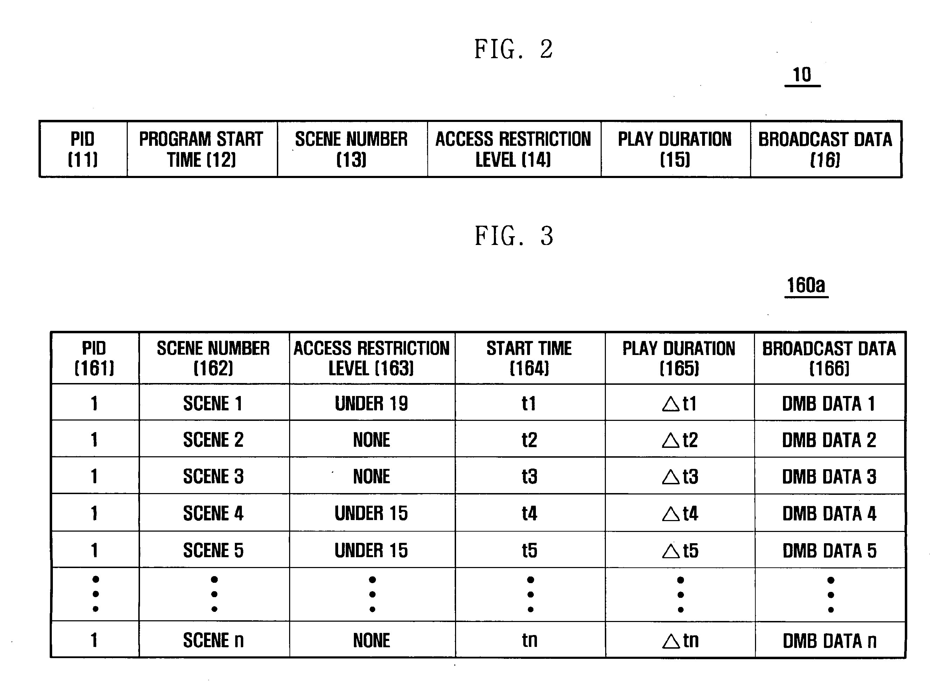

An example of a format of digital broadcast data receivable by the broadcast receiver 110 is illustrated in FIG. 2, and is described later herein.

The broadcast data processor 120 processes the digital broadcast data received by the broadcast receiving unit 110, and sends the processed digital broadcast data to the broadcast output unit 130. For example, from digital broadcast data received in the form of a Moving Picture Experts Group's MPEG-2 transport stream (TS), MPEG-4 coded data is detected and decoded into digital audio and video data. The broadcast data processor 120 preferably includes a TS demultiplexer, audio/video buffer and A/V codec.

The broadcast data processor 120 also detects access restriction information from the received digital broadcast data, and transmits the detected access restriction information to the controller 150. If access restriction information is received on a program basis by the broadcast receiving unit 110, the broadcast data processor 120 detects the access restriction information in the beginning portion of corresponding program broadcast data. If access restriction information is received on a scene basis, the broadcast data processor 120 detects access restriction information at each reception of corresponding scene broadcast data. The broadcast data processor 120 then transmits the detected access restriction information to the controller 150.

The broadcast data processor 120 can also transmit received digital broadcast data containing access restriction information regarding scenes to the controller 150.

The broadcast output unit 130 outputs digital broadcast data processed by the broadcast data processor 120, and preferably includes a speaker for outputting audio data and a display section for outputting video data.

In particular, the broadcast output unit 130 provides advance notices of access-restricted scenes before the start times of the access-restricted scenes under the control of the controller 150. An advance notice may be output as a text message (e.g., 'after 10 minutes, under the age of 19' or 'after 10 minutes, under the age of 15'), or a visual image or voice data, preset to indicate output of an access-restricted scene.

The command input unit 140 inputs a user command and sends the command to the controller 150. The command input unit 140 inputs user commands to initiate and terminate reception of digital broadcast data and to record received, and replay recorded, digital broadcast data, and sends the commands to the controller 150.

The controller 150 controls the operation of the digital broadcast receiver 100 according to operational programs set in advance or user commands input through the command input unit 140. That is, the controller 150 controls operations of the broadcast receiving unit 110, broadcast data processor 120 and broadcast output unit 130.

The controller 150 stores scene access restriction information or scene broadcast data from the broadcast data processor 120 in the broadcast data memory 160. The scene broadcast data preferably includes associated access restriction information. The controller 150 creates a broadcast data table to manage digital broadcast data containing access restriction information regarding scenes, and stores the broadcast data table in the broadcast data memory 160.

Using access restriction information of scenes or scene broadcast data stored in the broadcast data memory 160, the controller 150 controls the broadcast output unit 130 to provide an advance notice of an access-restricted scene before the start time of the scene. The controller 150 preferably pre-stores a preliminary notice duration and notice type. The preliminary notice duration denotes the duration of issue of an advance notice before output of a corresponding access-restricted scene, and the notice type denotes an output form of an advance notice (e.g., a text message, visual image or voice signal).

The controller 150 requests the user to determine whether to preprocess an access-restricted scene (e.g., image mosaic generation, scrambling or blocking), and preprocesses the access-restricted scene before output of the scene according to a user selection.

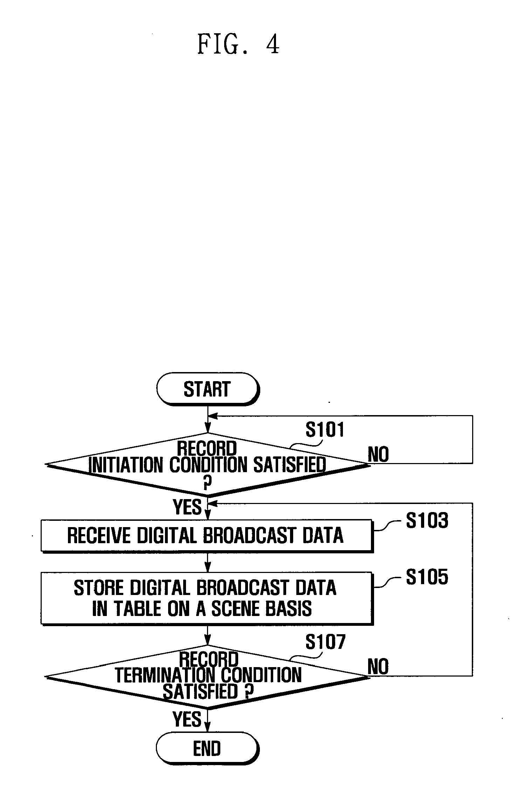

In response to user commands through the command input unit 140, the controller 150 controls operations of the broadcast receiving unit 110, broadcast data processor 120 and broadcast output unit 130 to record digital broadcast data, to replay recorded digital broadcast data and to output real-time digital broadcast data. Processing steps of the digital broadcast receiver 100 for recording of digital broadcast data, replay of recorded digital broadcast data and output of real-time digital broadcast data are illustrated in FIGS. 4 to 6, respectively, and are described later herein.

The broadcast data memory 160 stores digital broadcast data received through the broadcast receiving unit 110 under the control of the controller 150. The broadcast data memory 160 stores on a scene basis digital broadcast data constituting a predetermined program and associated access restriction information. For management of digital broadcast data, a broadcast data table stored in the broadcast data memory 160 is illustrated in FIG. 3, and is described later herein.

FIG. 2 shows a format of digital broadcast data receivable by the digital broadcast receiver 100 of FIG. 1. In particular, the data format of FIG. 2 is used to transmit digital broadcast data containing access restriction information on a scene basis.

Referring to FIG. 2, digital broadcast data 10 includes fields for a program identifier (PID) 11, a program start time 12, a scene number 13, an access restriction level 14, a play duration 15 and broadcast data 16.

The program identifier 11 identifies a program to which the digital broadcast data 10 is associated. The program identifier 11 and program start time 12 are common to all scenes constituting the program.

The scene number 13 identifies a scene, the access restriction level 14 is access restriction information for the scene, the play duration 15 denotes the play duration of the scene and the broadcast data 16 denotes a piece of received broadcast data.

FIG. 3 illustrates a broadcast data table for managing digital broadcast data in the digital broadcast receiver 100 of FIG. 1. Referring to FIG. 3, each data item of the broadcast data table 160a includes fields for a PID 161, a scene number 162, an access restriction level 163, a start time 164, a play duration 165 and broadcast data 166.

The scene number 162 identifies a scene in a corresponding program, and the access restriction level 163 is access restriction information for the scene.

The start time 164 denotes the start time of the scene, and the play duration 165 denotes the play duration of the scene.

Referring to FIG. 3, the start time of a particular scene in a program can be computed by adding play durations of preceding scenes to the start time of the beginning scene. For example, the start time t2 of the second scene is given by adding the play duration $\Delta t1$ of the beginning scene to the start time t1 of the beginning scene. The start time t3 of the third scene is given by adding the play duration $\Delta t2$ of the second scene to the start time t2 of the second scene. Example expressions to compute start times of scenes are illustrated in Equation 1.

## Equation 1

$$t2 = t1 + \Delta t1;$$

$$t3 = t2 + \Delta t2;$$

$$t4 = t3 + \Delta t3;$$

$$t5 = t4 + \Delta t4;$$

$$\dots$$

$$tn = t(n-1) + \Delta t(n-1)$$

In the case of real-time broadcast data output, the start time t1 of the beginning scene of a particular program corresponds to the 'reception time' of the program or the time of 'reception time' plus 'delay duration' (e.g., preliminary notice duration). In the case of replay of recorded broadcast data according to a user request, the start time t1 of the beginning scene of a particular program corresponds to the 'replay request time' of the program or the time of 'replay request time' plus 'delay duration'.

The broadcast data table 160a is received through the broadcast receiving unit 110 of the digital broadcast receiver 100 of FIG. 1, or is created by the controller 150 using digital broadcast data received through the broadcast receiving unit 110.

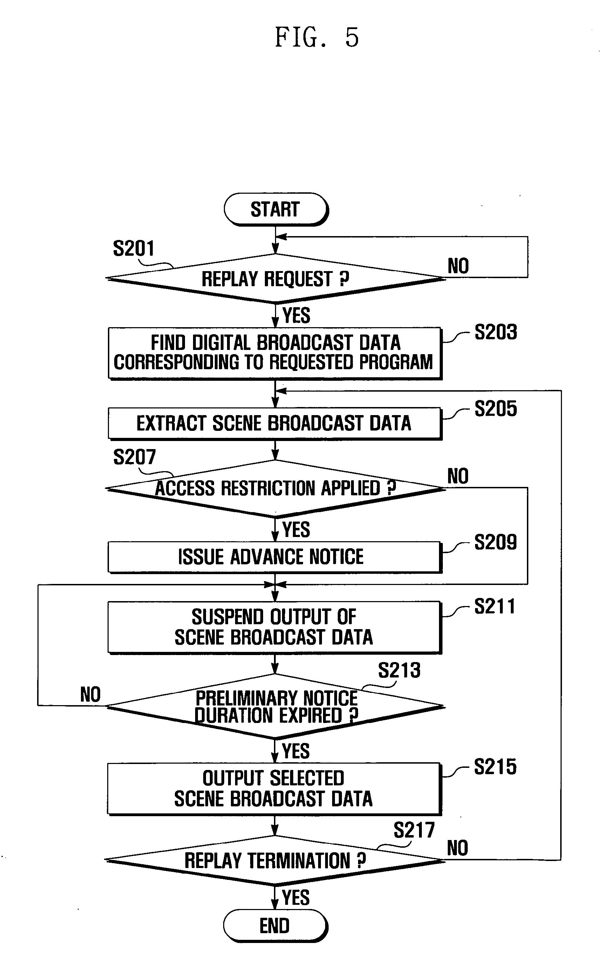

FIGS. 4 and 5 are flow charts illustrating steps of a first embodiment of an access restriction method according to the present invention. The method of FIGS. 4 and 5 relates to replay of recorded digital broadcast data, the flow chart of FIG. 4 illustrates steps to record digital broadcast data, and the flow chart of FIG. 5 illustrates steps to replay recorded digital broadcast data.

Referring to FIGS. 1 and 4, when a record initiation condition is satisfied (S101), the controller 150 controls the broadcast receiving unit 110 to receive digital broadcast data (S103). The record initiation condition is a record initiation time preset by a user selection or input of a record command. That is, if the current time is equal to a preset record initiation time or a record command is input through the command input unit 140, the controller 150 controls the broadcast receiving unit 110 to receive digital broadcast data.

The received digital broadcast data is stored on a scene basis in a broadcast data table as illustrated in FIG. 3 (S105). The controller 150 receives digital broadcast data containing access restriction information regarding scenes, and stores the received digital broadcast data in the broadcast data memory 160.

If a record termination condition is not satisfied (S107), steps S103 and S105 are repeated. If the record termination condition is satisfied, the recording process is terminated. Preferably, the record termination condition is the end of the program being recorded or a preset record termination time.

The PID of a program can be used as a record initiation and termination condition. For example, if the user pre-specifies a program to be recorded, the controller 150 stores the PID of the program to be recorded. The controller 150 initiates and continues recording when the PID of digital broadcast data received through the broadcast receiving unit 110 is equal to the stored PID, and terminates recording when the PID of newly received digital broadcast data is not equal to the stored PID.

Referring to FIGS. 1 and 5, when a replay request for a recorded program is input through the command input unit 140 by the user (S201), the controller 150 selects digital broadcast data corresponding to the requested program from the broadcast data memory 160 (S203). The controller 150 identifies the PID of the requested program, and selects from the broadcast data memory 160 digital broadcast data for which the PID is equal to the identified PID. Preferably, the controller 150 buffers the selected digital broadcast data to output the selected digital broadcast data in order of scene numbers.

The controller 150 extracts scene broadcast data in sequence from the selected digital broadcast data (S205), and identifies access restriction information of the extracted scene broadcast data to determine whether access-restriction is applied to the corresponding scene (S207). The controller 150 selects digital broadcast data corresponding to the requested program from a broadcast data table as illustrated in FIG. 3, extracts scene broadcast data in order of scenes from the selected digital broadcast data, and identifies access restriction information of the extracted scene broadcast data.

If access-restriction is determined to be applied at step S207, the controller 150 issues an advance notice, indicating output of a scene access-restricted for, for example, people under a particular age, in predetermined minutes (S209). The advance notice can be output as a display, as a text message or visual image, or as voice data.

The controller 150 suspends output of the extracted scene broadcast data (S211). If a preliminary notice duration expires (S213), the scene broadcast data is output (S215). Steps S205 to S215 are repeated until a replay termination request is input (S217). That is, the controller 150 controls the broadcast output unit 130 to output the extracted scene broadcast data at a time after the preliminary notice duration from the issue of the advance notice. The controller 150 preferably pre-stores the preliminary notice duration.

If no access-restriction is determined to be applied at step S207, the controller 150 suspends output of the extracted scene broadcast data without an advance notice (S211) to await expiration of the preliminary notice duration.

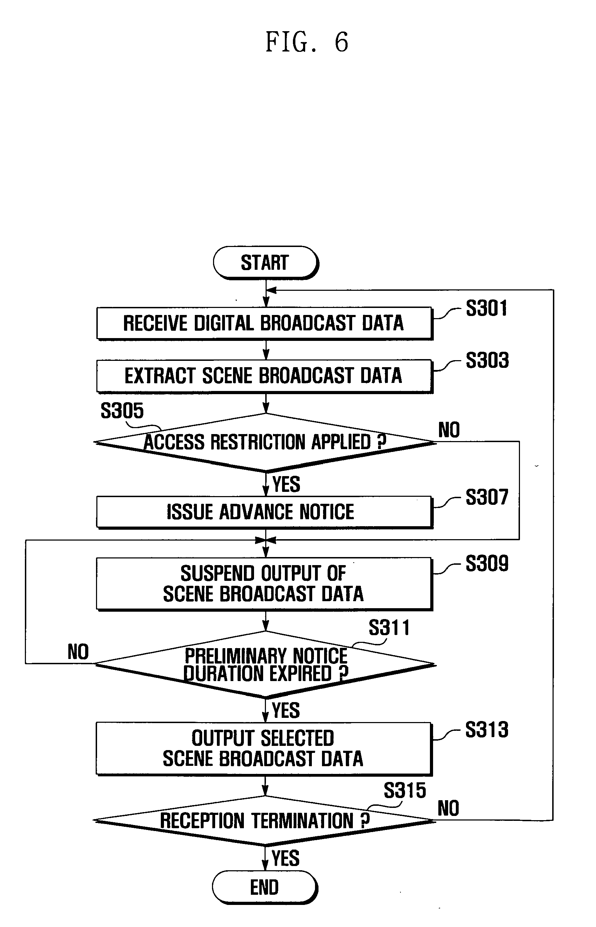

FIG. 6 is a flow chart illustrating steps of a second embodiment of an access restriction method according to the present invention. FIG. 6 illustrates steps to output digital broadcast data received in real time.

Referring to FIGS. 1 and 6, the digital broadcast receiver 100 receives real-time digital broadcast data through the broadcast receiving unit 110 (S301). The digital broadcast data received at step S301 includes access restriction information regarding scenes constituting a particular program, wherein the access restriction information is contained in a beginning portion of the program data (on a program basis) or is distributed among the corresponding scenes (on a scene basis).

If the digital broadcast data received at step S301 includes access restriction information arranged on a program basis, the controller 150 detects access restriction information in a beginning portion of particular program data, and creates and stores a broadcast data table as illustrated in FIG. 3 to manage the detected access restriction information and associated information on scenes, such as start times and play durations. The controller 150 extracts scene broadcast data in sequence from the digital broadcast data received at step S301 (S303), and determines whether access-restriction is applied to the corresponding scene (S305). If the digital broadcast data received at step S301 includes access restriction information arranged on a program basis, the controller 150 determines whether access-restriction is applied to the corresponding scene using the broadcast data table. If the digital broadcast data received at step S301 includes access restriction information arranged on a scene basis, the controller 150 determines whether access-restriction is applied to the corresponding scene using the extracted scene broadcast data.

If access-restriction is determined to be applied at step S305, the controller 150 issues an advance notice, indicating output of a scene access-restricted for people such as those under a particular age, in predetermined minutes (S307). The advance notice can be displayed as a text message or visual image, or output as voice data.

The controller 150 suspends output of the extracted scene broadcast data (S309). If a preliminary notice duration expires (S311), the scene broadcast data is output (S313). Steps S301 to S313 are repeated until a reception termination request is input (S315). That is, the controller 150 controls the broadcast output unit 130 to output the extracted scene broadcast data after the preliminary notice duration from the issue of the advance notice. The controller 150 preferably pre-stores the preliminary notice duration.

If no access-restriction is determined to be applied at step S305, the controller 150 suspends output of the extracted scene broadcast data without an advance notice (S309) to await expiration of the preliminary notice duration.

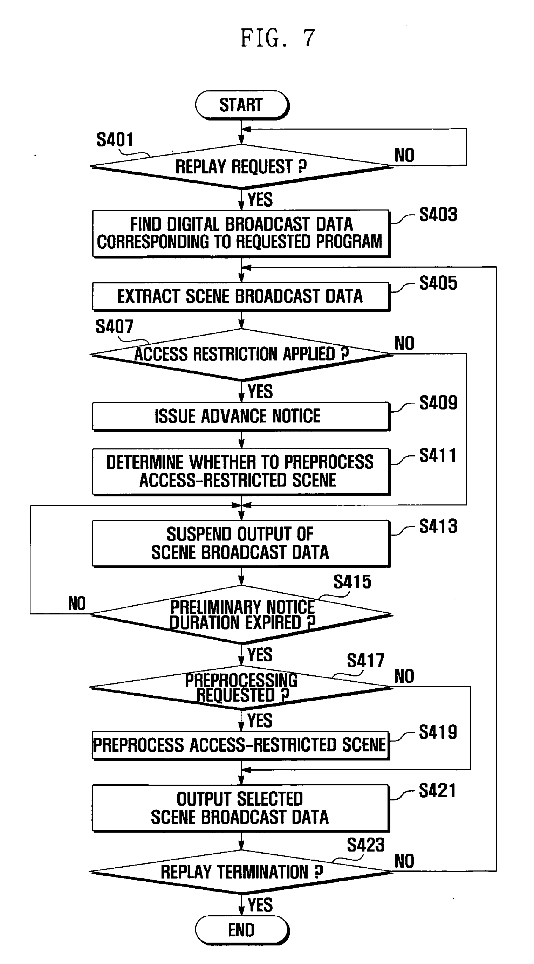

FIG. 7 is a flow chart illustrating steps of a third embodiment of an access restriction method according to the present invention. Compared with the method of FIG. 5 for replay of recorded digital broadcast data, the method of FIG. 7 further includes steps to preprocess an access-restricted scene according to a user selection after issuing an advance notice.

Referring to FIGS. 1 and 7, when a replay request for a recorded program is input through the command input unit 140 by the user (S401), the controller 150 finds digital broadcast data corresponding to the requested program from the broadcast data memory 160 (S403). The controller 150 identifies the PID of the requested program, and selects from the broadcast data memory 160 digital broadcast data for which the PID is equal to the identified PID. Preferably, the controller 150 buffers the selected digital broadcast data to output the selected digital broadcast data in order of scene numbers.

The controller 150 extracts scene broadcast data in sequence from the selected digital broadcast data (S405), and identifies access restriction information of the extracted scene broadcast data to determine whether access-restriction is applied (S407). The controller 150 finds digital broadcast data corresponding to the requested program from a broadcast data table as illustrated in FIG. 3, extracts scene broadcast data in order of scenes from the found digital broadcast data, and identifies access restriction information of the extracted scene broadcast data.

If access-restriction is determined to be applied at step S407, the controller 150 issues an advance notice, indicating output of a scene access-restricted, for people such as those under a particular age, in predetermined minutes (S409). The advance notice can be displayed as a text message or visual image, or output as voice data.

The controller 150 requests the user to decide whether to preprocess the access-restricted scene (e.g., image mosaic generation, scrambling or blocking) (S411).

The controller 150 suspends output of the extracted scene broadcast data (S413). If a preliminary notice duration expires (S415), the controller 150 determines whether the user requested preprocessing of the access-restricted scene (S417).

If the preprocessing is selected, the controller 150 preprocesses the access-restricted scene (S419) and outputs the scene broadcast data (S421). For preprocessing, image mosaic generation, scrambling or blocking may be applied to the access-restricted scene.

If the preprocessing is not selected, the controller 150 outputs the scene broadcast data without preprocessing (S421).

Steps S405 to S421 are repeated until a replay termination request is input (S423). That is, the controller 150 controls the broadcast output unit 130 to output the extracted scene broadcast data after the preliminary notice duration from the issue of the advance notice. The controller 150 preferably pre-stores the preliminary notice duration.

If no access-restriction is determined to be applied at step S407, the controller 150 suspends output of the extracted scene broadcast data without an advance notice (S413) to await expiration of the preliminary notice duration.

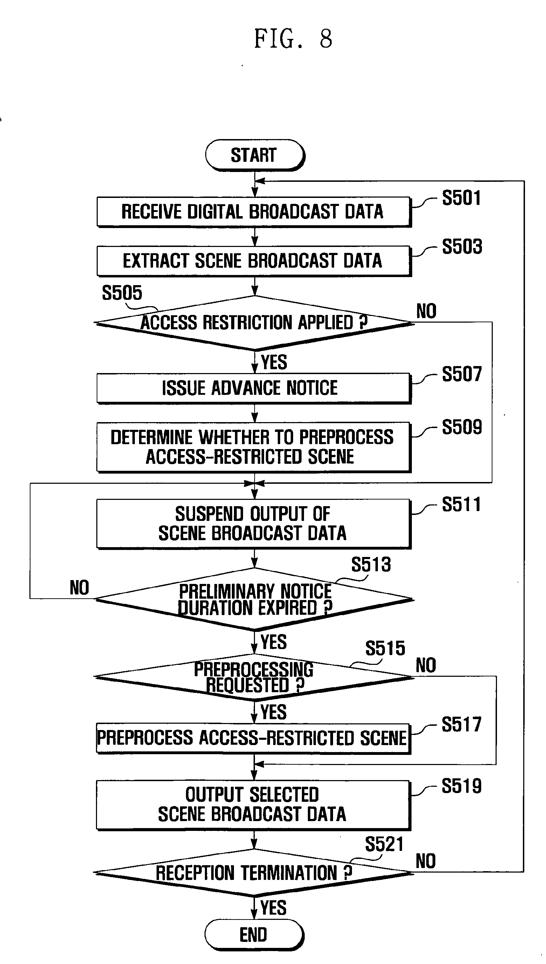

FIG. 8 is a flow chart illustrating steps of a fourth embodiment of an access restriction method according to the present invention. Compared with the method of FIG. 6 for output of real-time digital broadcast data, the method of FIG. 8 further includes steps to preprocess an access-restricted scene according to a user selection after issuing an advance notice.

Referring to FIGS. 1 and 8, the digital broadcast receiver 100 receives real-time digital broadcast data through the broadcast receiving unit 110 (S501). The digital broadcast data received at step S501 includes access restriction information regarding scenes constituting a particular program, wherein the access restriction information is contained in a beginning portion of the program data (on a program basis) or is distributed among the corresponding scenes (on a scene basis).

If the digital broadcast data received at step S501 includes access restriction information arranged on a program basis, the controller 150 detects access restriction information in a beginning portion of particular program data, and creates and stores a broadcast data table as illustrated in FIG. 3 to manage the detected access restriction information and associated information on scenes, such as start times and play durations.

The controller 150 extracts scene broadcast data in sequence from the digital broadcast data received at step S501 (S503), and determines whether access-restriction is applied to the corresponding scene (S505).

If the digital broadcast data received at step S501 includes access restriction information arranged on a program basis, the controller 150 determines whether access-restriction is applied to the corresponding scene using the broadcast data table. If the digital broadcast data received at step S501 includes access restriction information arranged on a scene basis, the controller 150 determines whether access-restriction is applied to the corresponding scene using the extracted scene broadcast data.

If access-restriction is determined to be applied at step S505, the controller 150 issues an advance notice, indicating output of a scene access-restricted for people such as those under a particular age, in predetermined minutes (S507). The advance notice can be displayed as a text message or visual image, or output as voice data.

The controller 150 requests the user to decide whether to preprocess the access-restricted scene (e.g., image mosaic generation, scrambling or blocking) (S509).

The controller 150 suspends output of the extracted scene broadcast data (S511). If a preliminary notice duration expires (S513), the controller 150 determines whether the user requested preprocessing of the access-restricted scene (S515).

If the preprocessing is selected, the controller 150 preprocesses the access-restricted scene (S517) and outputs the scene broadcast data (S519). For preprocessing, image mosaic generation, scrambling or blocking may be applied to the access-restricted scene.

If the preprocessing is not selected, the controller 150 outputs the scene broadcast data without preprocessing (S519).

Steps S501 to S519 are repeated until a reception termination request is input (S521). That is, the controller 150 controls the broadcast output unit 130 to output the extracted scene broadcast data after the preliminary notice duration from the issue of the advance notice. The controller 150 preferably pre-stores the preliminary notice duration.

If no access-restriction is determined to be applied at step S505, the controller 150 suspends output of the extracted scene broadcast data without an advance notice (S511) to await expiration of the preliminary notice duration.

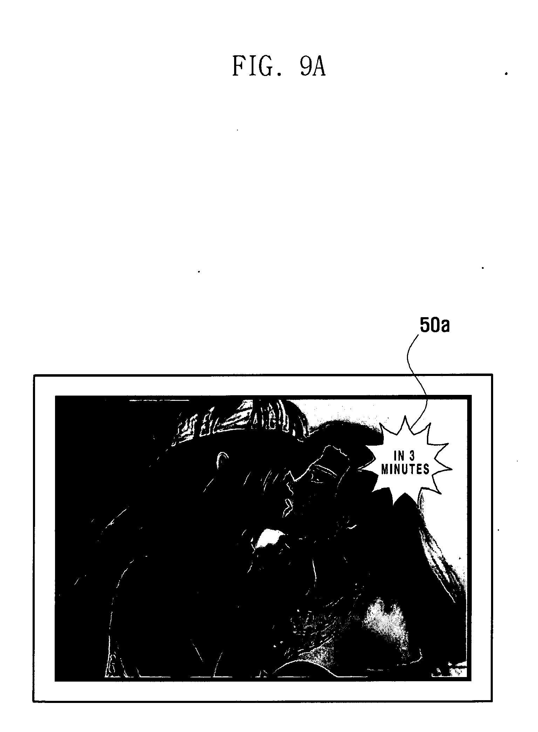

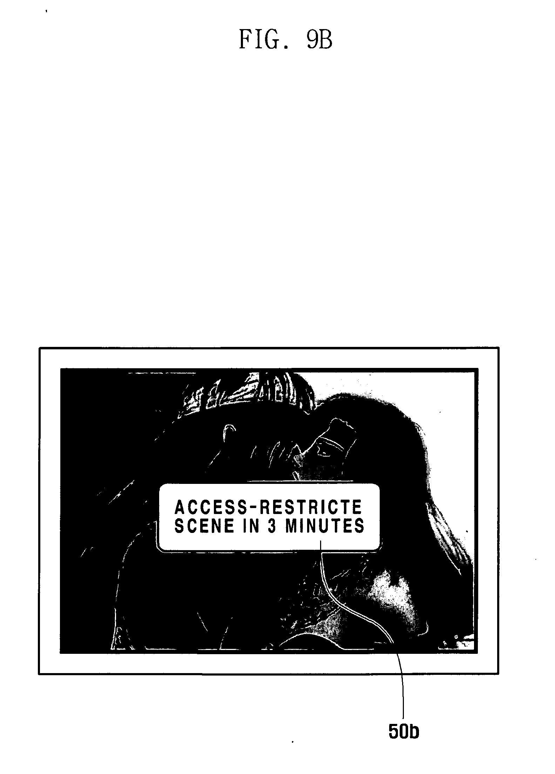

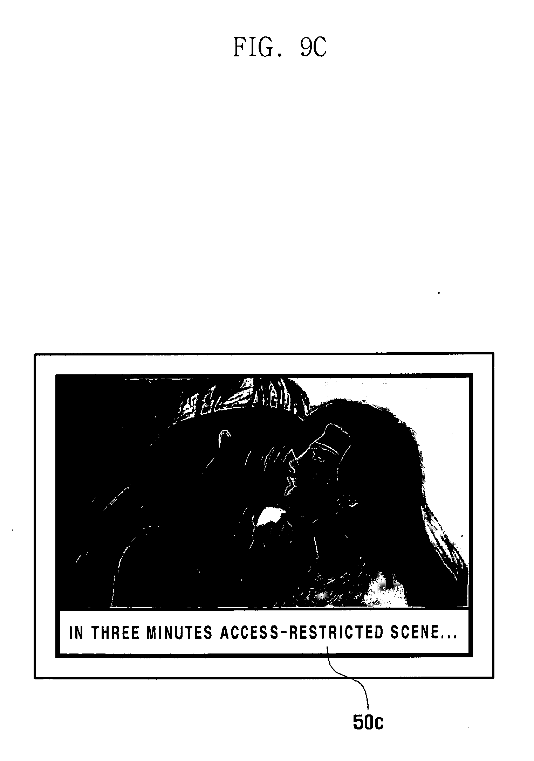

FIGS. 9A to 9Care display screen representations illustrating advance notices of access-restricted scenes output by the methods of FIGS. 5 to 8. FIG. 9A illustrates an advance notice 50adisplayed at an upper right end of a screen, FIG. 9B illustrates an advance notice 50bdisplayed at a central region of a screen, and FIG. 9C illustrates an advance notice 50c in a scrolled form displayed at the bottom of a screen.

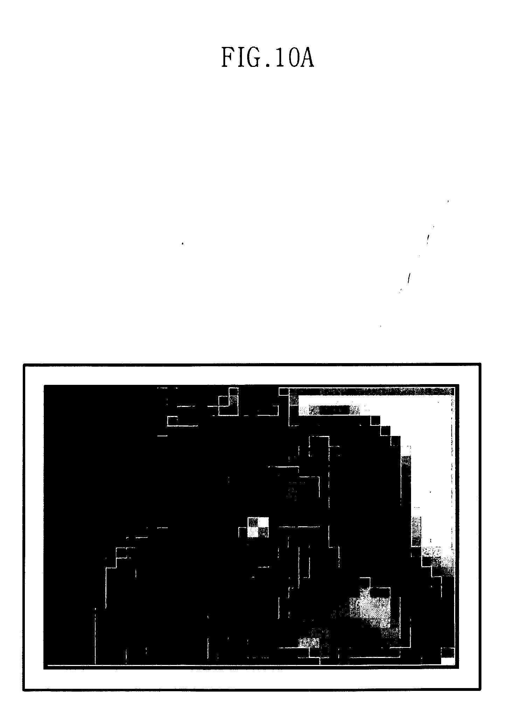

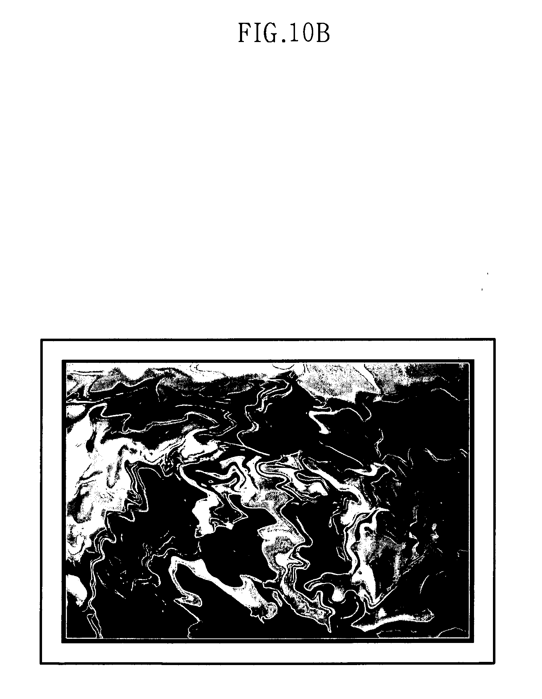

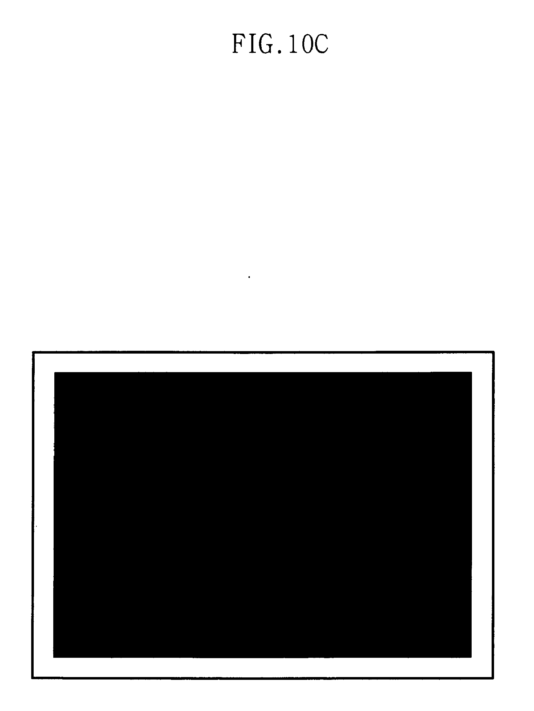

FIGS. 10A to 10C are display screen representations illustrating access-restricted scenes preprocessed by the methods of FIGS. 7 and 8. FIG. 10A illustrates a mosaic-type access-restricted scene according to a user selection, FIG. 10B illustrates a scrambled access-restricted scene, and FIG. 10B illustrates a blocked access-restricted scene.

As described above, the present invention provides advance notices of access-restricted scenes. The user can handle in advance access-restricted scenes prior to display thereof.

As apparent from the above description, the present invention provides a digital broadcast receiver and an access restriction method for the digital broadcast receiver, wherein advance notices of access-restricted scenes in digital broadcast data are provided to enable the user to handle in advance sudden display of access-restricted scenes. For example, users of digital broadcast data reception at public places may avoid an embarrassing situation due to display of inappropriate scenes. Users watching a digital broadcast program together with young people may appropriately handle violent or sensational scenes in advance.

While preferred embodiments of the present invention have been shown and described in this specification, it will be understood by those skilled in the art that various changes or modifications of the embodiments are possible without departing from the spirit and scope of the invention as defined by the appended claims. For example, in the description, access restriction information is related to age, however it may also be related to obscenity or violence. That is, preset information on levels of obscenity or violence of scenes can be utilized to apply access restriction. In addition, the present invention may be applied to a receiver for any digital broadcasting, such as digital multimedia broadcasting (DMB), digital video broadcasting - handheld (DVB-H) and MediaFLO.

## Claims

1. A digital broadcast receiver, comprising:

   a receiving unit for receiving digital broadcast data including access restriction information regarding scenes of a broadcast program;
   a controller for identifying an access-restricted scene using the access restriction information and producing, prior to display of the scene, a restriction control signal indicating the access-restricted scene prior to the display of the scene; and
   an output unit for providing, in response to the restriction control signal, an advance notice of the access-restricted scene.

2. The digital broadcast receiver of claim 1, wherein the digital broadcast data received by the receiving unit includes access restriction information arranged at a beginning portion of the corresponding program.

3. The digital broadcast receiver of claim 1, wherein the digital broadcast data received by the receiving unit includes access restriction information distributed among individual scenes of the corresponding program.

4. The digital broadcast receiver of claim 1, wherein the controller delays output of the digital broadcast data by a preliminary notice duration, and controls output of an advance notice for an access-restricted scene within the preliminary notice duration.

5. The digital broadcast receiver of claim 4, wherein the controller detects access restriction information regarding scenes of a particular program from the digital broadcast data, creates a management table using the detected access restriction information to manage scene access restriction information, and controls output of advance notices for access-restricted scenes in the program using the management table.

6. The digital broadcast receiver of claim 5, wherein the management table includes a start time and scene play durations of the program, and wherein the controller sets a start time of a beginning scene to the start time of the program, computes a start time of each scene by adding play durations of preceding scenes to the start time of the beginning scene, and controls output of an advance notice for an access-restricted scene before the start time of the access-restricted scene by the preliminary notice duration.

7. The digital broadcast receiver of claim 6, wherein the controller sets the start time of the beginning scene to a time delayed by the preliminary notice duration from the start time of the program.

8. The digital broadcast receiver of claim 1, wherein the controller requests a user to determine whether to preprocess an access-restricted scene, and preprocesses the access-restricted scene according to a user selection before output of the scene.

9. The digital broadcast receiver of claim 8, wherein the controller mosaics the access-restricted scene according to the user selection.

10. The digital broadcast receiver of claim 8, wherein the controller scrambles the access-restricted scene according to the user selection.

11. The digital broadcast receiver of claim 8, wherein the controller blocks the access-restricted scene according to the user selection.

12. The digital broadcast receiver of claim 1, further comprising a data memory for storing digital broadcast data received and recorded according to a user record request, and wherein the controller, according to a user replay request, selects scene broadcast data in sequence from the stored digital broadcast data and delays output of the selected scene broadcast data by a preset preliminary notice duration, and controls output of an advance notice for an access-restricted scene within the preliminary notice duration.

13. The digital broadcast receiver of claim 12, wherein the data memory stores scene broadcast data corresponding to scenes of a particular program, the scene broadcast data including a scene number, an access restriction level, a start time and a play duration.

14. The digital broadcast receiver of claim 13, wherein the controller, according to a user replay request for a particular program, selects in sequence scene broadcast data of the replay-requested program from the data memory, sets a start time of a beginning scene of the program to a requested replay duration, computes a start time of each scene by adding play durations of preceding scenes to the start time of the beginning scene, and controls output of an advance notice for an access-restricted scene before the start time of the access-restricted scene by the preliminary notice duration.

15. The digital broadcast receiver of claim 12, wherein the controller requests a user to determine whether to preprocess an access-restricted scene, and preprocesses the access-restricted scene according to a user selection before output of the scene.

16. The digital broadcast receiver of claim 15, wherein the controller mosaics the access-restricted scene according to the user selection.

17. The digital broadcast receiver of claim 15, wherein the controller scrambles the access-restricted scene according to the user selection.

18. The digital broadcast receiver of claim 15, wherein the controller blocks the access-restricted scene according to the user selection.

19. The digital broadcast receiver of claim 14, wherein the controller sets the start time of the beginning scene to a time delayed by the preliminary notice duration from the start time of the program.

20. The digital broadcast receiver of claim 1, wherein the advance notice is output as a text message.

21. The digital broadcast receiver of claim 1, wherein the advance notice is output as a visual image.

22. The digital broadcast receiver of claim 1, wherein the advance notice is output as a voice signal.

23. An access restriction method for a digital broadcast receiver, comprising:

   receiving digital broadcast data including access restriction information regarding scenes of a program;
   selecting in sequence scene broadcast data from the received digital broadcast data;
   determining whether access restriction is applied to the selected scene broadcast data;
   providing, if access restriction is applied to the selected scene broadcast data, an advance notice for a corresponding access-restricted scene; and
   outputting the selected scene broadcast data at a time delayed by a preliminary notice duration.

24. The access restriction method of claim 23, further comprising requesting, if access restriction is applied to the selected scene broadcast data, a user to determine whether to preprocess the access-restricted scene, and wherein the outputting step further includes preprocessing, according to a user selection, the access-restricted scene before output of the scene.

**25.** The access restriction method of claim 24, wherein the preprocessing step includes providing the access-restricted scene in mosaic form.

**26.** The access restriction method of claim 24, wherein the preprocessing step includes scrambling the access-restricted scene.

**27.** The access restriction method of claim 24, wherein the preprocessing step includes blocking the access-restricted scene.

**28.** The access restriction method of claim 23, wherein the digital broadcast data received at the receiving step includes access restriction information regarding scenes of a particular program, the access restriction information being arranged at a beginning portion of the program.

**29.** The access restriction method of claim 28, wherein the receiving step further includes detecting the access restriction information from the beginning portion of the program in the received digital broadcast data, and creating and storing a management table to store scene broadcast data, associated access restriction levels, start times and play durations.

**30.** The access restriction method of claim 29, wherein determining whether access restriction is applied to a scene for output is performed using the management table.

**31.** The access restriction method of claim 23, wherein the received digital broadcast data includes access restriction information regarding scenes of a particular program, the access restriction information being distributed among individual scenes of the program.

**32.** The access restriction method of claim 31, wherein determining whether access restriction is applied to a scene for output is performed using corresponding scene broadcast data.

**33.** The access restriction method of claim 23, wherein the advance notice is output as a text message.

**34.** The access restriction method of claim 23, wherein the advance notice is output as a visual image.

**35.** The access restriction method of claim 23, wherein the advance notice is output as a voice signal.

**36.** An access restriction method for a digital broadcast receiver, comprising:

selecting, in response to a user replay request for a particular recorded program, scene broadcast data of the recorded program in sequence from stored digital broadcast data;
determining whether access restriction is applied to the selected scene broadcast data;
providing, if access restriction is applied to the selected scene broadcast data, an advance notice for a corresponding access-restricted scene; and
outputting the selected scene broadcast data at a time delayed by a preliminary notice duration.

**37.** The access restriction method of claim 36, further comprising requesting, if access restriction is applied to the selected scene broadcast data, a user to determine whether to preprocess the access-restricted scene, and wherein the outputting step further includes preprocessing, according to a user selection, the access-restricted scene before output of the scene.

**38.** The access restriction method of claim 37, wherein the preprocessing step includes providing the access-restricted scene in mosaic form.

**39.** The access restriction method of claim 37, wherein the preprocessing step includes scrambling the access-restricted scene.

**40.** The access restriction method of claim 37, wherein the preprocessing step includes blocking the access-restricted scene.

**41.** The access restriction method of claim 36, further comprising:

receiving, in response to a user record request for a particular program, digital broadcast data containing access restriction information regarding scenes of the record-requested program; and
storing the received digital broadcast data.

**42.** The access restriction method of claim 41, wherein at the storing step a management table is created using the received digital broadcast data to store scenes of the record-requested program each including a corresponding program identifier and an access restriction level.

**43.** The access restriction method of claim 42, wherein at the selecting step scene broadcast data having a program identifier equal to that of the replay-requested program is selected from the management table.

**44.** The access restriction method of claim 36, wherein the advance notice is output as a text message.

**45.** The access restriction method of claim 36, wherein the advance notice is output as a visual image.

46. The access restriction method of claim 36, wherein the advance notice is output as a voice signal.

FIG. 1

<u>100</u>

110             120            130

| BROADCAST RECEIVING UNIT | BROADCAST DATA PROCESSOR | BROADCAST OUTPUT UNIT |

140

| COMMAND INPUT UNIT | CONTROLLER | 150 | BROADCAST DATA MEMORY 160 |

EP 1 845 727 A2

## FIG. 2

10

| PID<br>(11) | PROGRAM START<br>TIME (12) | SCENE NUMBER<br>(13) | ACCESS RESTRICTION<br>LEVEL (14) | PLAY DURATION<br>(15) | BROADCAST DATA<br>(16) |
|---|---|---|---|---|---|

## FIG. 3

160a

| PID<br>(161) | SCENE NUMBER<br>(162) | ACCESS RESTRICTION<br>LEVEL (163) | START TIME<br>(164) | PLAY DURATION<br>(165) | BROADCAST DATA<br>(166) |
|---|---|---|---|---|---|
| 1 | SCENE 1 | UNDER 19 | t1 | $\triangle$t1 | DMB DATA 1 |
| 1 | SCENE 2 | NONE | t2 | $\triangle$t2 | DMB DATA 2 |
| 1 | SCENE 3 | NONE | t3 | $\triangle$t3 | DMB DATA 3 |
| 1 | SCENE 4 | UNDER 15 | t4 | $\triangle$t4 | DMB DATA 4 |
| 1 | SCENE 5 | UNDER 15 | t5 | $\triangle$t5 | DMB DATA 5 |
| ⋮ | ⋮ | ⋮ | ⋮ | ⋮ | ⋮ |
| 1 | SCENE n | NONE | tn | $\triangle$tn | DMB DATA n |

13

FIG. 4

START

RECORD INITIATION CONDITION SATISFIED ? — S101 — NO

YES

RECEIVE DIGITAL BROADCAST DATA — S103

STORE DIGITAL BROADCAST DATA IN TABLE ON A SCENE BASIS — S105

RECORD TERMINATION CONDITION SATISFIED ? — S107 — NO

YES

END

# FIG. 5

```
                    ┌─────────────┐
                    │    START    │
                    └──────┬──────┘
                           ▼
 S201                ◇─────────────◇         NO
         ◇─────────  REPLAY REQUEST ?  ─────────────┐
                     ◇─────────────◇                │
                           │ YES                    │
              ┌────────────────────────────┐        │
              │  FIND DIGITAL BROADCAST DATA │  S203  │
              │ CORRESPONDING TO REQUESTED PROGRAM │  │
              └────────────┬───────────────┘        │
                           ▼                        │
              ┌────────────────────────────┐  S205  │
              │  EXTRACT SCENE BROADCAST DATA │      │
              └────────────┬───────────────┘        │
 S207                      ▼                         │
              ◇──────────────────────────◇   NO      │
         ◇──  ACCESS RESTRICTION APPLIED ?  ─────────┐│
              ◇──────────────────────────◇          ││
                           │ YES                     ││
              ┌────────────────────────────┐  S209   ││
              │      ISSUE ADVANCE NOTICE    │         ││
              └────────────┬───────────────┘         ││
                           ▼                          ││
              ┌────────────────────────────┐  S211   ││
              │       SUSPEND OUTPUT OF      │         ││
              │      SCENE BROADCAST DATA    │         ││
              └────────────┬───────────────┘         ││
                           ▼         S213             ││
      NO       ◇──────────────────────────◇          ││
     ┌──────── PRELIMINARY NOTICE           │         ││
     │         DURATION EXPIRED ?  ─────────◇         ││
     │         ◇──────────────────────────◇          ││
     │                     │ YES                      ││
     │        ┌────────────────────────────┐  S215   ││
     │        │      OUTPUT SELECTED         │         ││
     │        │     SCENE BROADCAST DATA     │         ││
     │        └────────────┬───────────────┘         ││
     │                     ▼          S217            ││
     │         ◇──────────────────────────◇   NO      ││
     │         REPLAY TERMINATION ?  ─────────────────┘│
     │         ◇──────────────────────────◇           │
     │                     │ YES                       │
     │              ┌─────────────┐                    │
     │              │     END     │                    │
     │              └─────────────┘                    │
```

# FIG. 6

```
                    ┌──────────┐
                    │  START   │
                    └──────────┘
                         │
                         ▼
        ┌─────────────────────────────────┐  ⟋ S301
        │  RECEIVE DIGITAL BROADCAST DATA  │
        └─────────────────────────────────┘
                         │
                         ▼
        ┌─────────────────────────────────┐  ⟋ S303
        │   EXTRACT SCENE BROADCAST DATA   │
        └─────────────────────────────────┘
    S305                 │
         ◇───────────────────────────────◇   NO
         ◇   ACCESS RESTRICTION APPLIED ? ◇──────
          ◇─────────────────────────────◇
                       │ YES
                       ▼                       S307
        ┌─────────────────────────────────┐  ⟋
        │       ISSUE ADVANCE NOTICE       │
        └─────────────────────────────────┘
                       │
                       ▼                       S309
        ┌─────────────────────────────────┐  ⟋
        │         SUSPEND OUTPUT OF        │
        │       SCENE BROADCAST DATA       │
        └─────────────────────────────────┘
                       │
                       ▼           S311
    NO   ◇─────────────────────────────◇
    ─────◇      PRELIMINARY NOTICE      ◇
         ◇     DURATION EXPIRED ?        ◇
          ◇───────────────────────────◇
                       │ YES
                       ▼                       S313
        ┌─────────────────────────────────┐  ⟋
        │          OUTPUT SELECTED         │
        │       SCENE BROADCAST DATA       │
        └─────────────────────────────────┘
                       │           S315
                       ▼                   NO
         ◇─────────────────────────────◇──────
         ◇     RECEPTION TERMINATION ?  ◇
          ◇───────────────────────────◇
                       │ YES
                       ▼
                    ┌──────────┐
                    │   END    │
                    └──────────┘
```

## FIG. 7

START

S401 — REPLAY REQUEST ? — NO

YES

FIND DIGITAL BROADCAST DATA
CORRESPONDING TO REQUESTED PROGRAM — S403

EXTRACT SCENE BROADCAST DATA — S405

S407 — ACCESS RESTRICTION APPLIED ? — NO

YES

ISSUE ADVANCE NOTICE — S409

DETERMINE WHETHER TO PREPROCESS
ACCESS-RESTRICTED SCENE — S411

SUSPEND OUTPUT OF
SCENE BROADCAST DATA — S413

NO — PRELIMINARY NOTICE
DURATION EXPIRED ? — S415

YES

PREPROCESSING
REQUESTED ? — S417 — NO

YES

PREPROCESS ACCESS-RESTRICTED SCENE — S419

OUTPUT SELECTED
SCENE BROADCAST DATA — S421

REPLAY TERMINATION ? — S423 — NO

YES

END

# FIG. 8

```
                        START

                  RECEIVE DIGITAL BROADCAST DATA        S501

                  EXTRACT SCENE BROADCAST DATA          S503

S505
              ACCESS RESTRICTION APPLIED ?        NO

                          YES
                  ISSUE ADVANCE NOTICE                  S507

                  DETERMINE WHETHER TO PREPROCESS       S509
                  ACCESS-RESTRICTED SCENE

                  SUSPEND OUTPUT OF                     S511
                  SCENE BROADCAST DATA

                                    S513
        NO        PRELIMINARY NOTICE
                  DURATION EXPIRED ?

                          YES
                              S515
                  PREPROCESSING               NO
                  REQUESTED ?

                          YES
              PREPROCESS ACCESS-RESTRICTED SCENE        S517

                  OUTPUT SELECTED                       S519
                  SCENE BROADCAST DATA

                                  S521
              RECEPTION TERMINATION ?           NO

                          YES
                        END
```

FIG. 9A

# FIG. 9B

ACCESS-RESTRICTE
SCENE IN 3 MINUTES

50b

# FIG. 9C

IN THREE MINUTES ACCESS-RESTRICTED SCENE...

50c

FIG.10A

FIG.10B

FIG.10C